# EUROPÄISCHE PATENTSCHRIFT

(11) **EP 2 927 662 B1**
(45) Veröffentlichungstag und Bekanntmachung des Hinweises auf die Patenterteilung: **30.08.2017**
(21) Anmeldenummer: 15159311.8
(22) Anmeldetag: 17.03.2015
(51) Int. Cl.: F03D 80/70, F03D 17/00, G01M 13/04

(54) **VERFAHREN UND SYSTEM ZUR ÜBERWACHUNG DES ZUSTANDS EINES WÄLZLAGERS EINER WINDTURBINE**
METHOD AND SYSTEM FOR MONITORING THE STATUS OF A ROLLER BEARING OF A WIND TURBINE
PROCÉDÉ ET SYSTÈME DE SURVEILLANCE DE L'ÉTAT D'UN PALIER DE ROULEMENT D'UNE ÉOLIENNE

(30) Priorität: 02.04.2014 DE 102014005090
(43) Veröffentlichungstag der Anmeldung: 07.10.2015
(73) Patentinhaber: innogy SE, 45128 Essen (DE)
(72) Erfinder: Franke, Jan-Bernd, 25336 Elmshorn (DE)
(74) Vertreter: Cohausz & Florack

(56) Entgegenhaltungen:
- EP-A1- 2 476 901
- WO-A1-2010/069318
- DE-A1-102004 048 649
- DE-A1-102011 052 894
- US-A1- 2013 073 223

## Beschreibung

Der Gegenstand betrifft ein Verfahren als auch ein System zur Überwachung des Zustands eines Wälzlagers einer Windturbine.

Windturbinen verfügen über mechanisch hochbelastete Bauteile. Insbesondere die Lager und Wellen der Windturbinen, insbesondere die des Rotors sind stark wechselnden Winden und dadurch hoch schwankenden mechanischen Belastungen ausgesetzt. Durch die hohe mechanische Belastung weisen die Wälzlager eine begrenzte Gebrauchsdauer auf. Hierzu zählen insbesondere die Lager der Rotorwelle, die mit der Zeit abnutzen oder ermüden. Die Abnutzung und Ermüdung hängen auch von der Qualität der Fertigung und der Konstruktion der Wälzlager ab. Bei qualitativ minderwertigen oder konstruktiv falsch ausgelegten Wälzlagern kann das Ende der Gebrauchsdauer erheblich schneller erreicht sein als dies ursprünglich geplant war. Dies führt zu der Notwendigkeit, außerplanmäßige Instandsetzungsarbeiten an den Windturbinen durchzuführen. Im Offshore Bereich können die Kosten für einen außerplanmäßigen Austausch eines Wälzlagers an einem Rotor 1. Millionen Euro und mehr pro Windturbine kosten. Hinzu kommen die Kosten des Ausfalls der Windturbine in der Zeit bis die Instandsetzung durchgeführt werden kann.

Insofern ist es für den Betrieb einer Windturbine, insbesondere im Offshore Bereich notwendig, möglichst frühzeitig über eventuelle Schädigungen der Wälzlager Bescheid zu wissen. Ist das Wälzlager erst leicht beschädigt, und der Betreiber weiß darüber Bescheid, kann er den Austausch bereits planen. Dies führt zu geringeren Standzeiten der Windturbine und geringeren Kosten für die erforderlichen Installationsschiffe. Ein Wälzlager, welches kurz vor dem Totalausfall ist, kann gegebenenfalls durch ein Drosseln der Leistung / Drehzahl der Windturbine über einen etwas längeren Zeitraum noch betrieben werden. Dann ist der Ausfall durch einen Betriebsstillstand nicht ganz so dramatisch, doch auch in einem gedrosselten Betrieb fallen erhebliche Mindereinnahmen an.

Aus der EP 2 476 901 A1 ist ein Verfahren zur automatischen Überwachung einer Windturbine bekannt, bei der über ein Rechenmodell zuerst ein Soll-Wert für einen Statusparameter, beispielsweise eine Temperatur für Wälzlager einer Windturbine bestimmt wird, bevor eine Identifizierung eines Schadens eines Wälzlagers schließlich anhand eines Vergleiches von gemessenen Ist-Werten der Temperatur eines Wälzlagers mit den vorher bestimmten Soll-Werten der Temperatur eines Wälzlagers erfolgen kann. Nachteilig an dem genannten Verfahren ist allerdings, dass für die Konstruktion eines möglichst realen Modells eine Vielzahl von Messparametern nötig ist. Dies erfordert eine große Anzahl von Sensoren, was mit einem hohen Kostenfaktor verbunden ist.

Aus der DE 10 2004 048 649 A1 ist ein Verfahren zur Zustandsüberwachung eines Wälzlagers einer wälzgelagerten Vorrichtung bekannt, das für eine genauere Bestimmung des Zustandes eines Wälzlagers neben der Bestimmung von direkt an dem Wälzlager gemessenen Größen den Einbezug von anderen Messgrößen des Schmieröls, wie dem pH-Wert, dem elektrischen Leitwert, der Temperatur, dem Durchflussvolumen oder dem Druck des Schmieröls, vorschlägt. Nachteilig an diesem Verfahren ist ebenfalls, dass mit einer steigenden Anzahl von Messgrößen, die in die Bewertung einfließen, auch mehr Sensoren in das Verfahren integriert sein müssen, was wiederum mit einem größeren Aufwand und höheren Kosten verbunden ist.

Somit lag dem Gegenstand die Aufgabe zu Grunde, ein ausreichend zuverlässiges und zugleich einfaches und kostengünstiges Verfahren zur Verfügung zu stellen, mit dem drohende Defekte an Wälzlagern von Windturbinen frühzeitig erkannt werden können.

Diese Aufgabe wird gegenständlich durch ein Verfahren nach Anspruch 1 gelöst. Die Temperatur eines Wälzlagers gibt Auskunft über den Zustand des Lagers. Es ist jedoch erkannt worden, dass die Lagertemperatur darüber hinaus auch stark abhängig von der Umgebungstemperatur ist. Zusätzlich zu der mechanischen Belastung des Lagers, welche zu Reibungsverlusten und somit Verlustwärme führt, ist die Umgebungstemperatur auch maßgeblich für die Temperatur des Lagers.

Zum Einen schwankt die Temperatur des Lagers auf Grund der mechanischen Belastung erheblich, da die Windkräfte im Laufe eines Zeitraums von einem Monat oder einem Jahr stark variieren und somit der drehzahlbedingte Betriebspunkt der Windenergieeinlage erheblich schwankt. Zum Anderen schwankt jedoch auch die Umgebungstemperatur im Laufe der Jahreszeiten erheblich.

Im Falle eines Schadens auf einer der Laufbahnen am Innen- oder Außenring eines Wälzlagers steigt die Verlustleistung des Lagers an. Insbesondere bei einem Anstieg der Oberflächenrauigkeit aufgrund von kleinen Ausbrüchen auf den Laufbahnen steigt die Reibung an. Der Anstieg der Reibung führt zu einem Anstieg der Lagertemperatur. Aufgrund der sehr geringen Reibleistungen ist der Temperaturanstieg jedoch nur sehr gering ausgeprägt. Durch die stark schwankenden Betriebspunkte der Windenergieanlage sind diese geringen Temperaturanstiege nicht feststellbar, da die Temperaturanstiege aufgrund der schwankenden Belastungsbedingungen deutlich stärker ausgeprägt sind. Ein ungeschädigtes Lager erfährt bei einem Anstieg der Gondeltemperatur ebenfalls einen Temperaturanstieg. Der Temperaturanstieg des Lagers allein betrachtet ist demnach kein sicherer Indikator für einen beginnenden Lagerschaden.

Mit Hilfe eines an dem Lager angeordneten Sensors, insbesondere am Außenring des Lagers, ist es möglich, die Temperatur des Lagers zu ermitteln. Die Temperatur wird regelmäßig für die Betriebsführung der Windenergieanlage ausgewertet.

Herkömmlich ist es jedoch lediglich diese Temperatur, die bei der Betriebsführung ausgewertet wird und bei einem Überstreiten eines Grenzwertes der Lagertemperatur wird ein Alarmsignal ausgegeben. Dies kann zu einem Anlagenstopp führen oder ein Anlagenstopp kann eingeleitet werden.

Der herkömmlich festgestellte Temperaturpunkt deutet nur auf ein bereits defektes Lager hin, so dass ein Austausch unmittelbar notwendig wird. Um gegenständlich nun frühzeitig über einen möglichen Defekt Auskunft zu erlangen, sind die bisher ermittelten Werte zu ungenau. Es ist erkannt worden, dass neben der Lagertemperatur selbst auch die Umgebungstemperatur, insbesondere die Gondeltemperatur berücksichtig werden muss. Nur wenn diese Gondeltemperatur berücksichtig wird, kann eine Veränderung der Lagertemperatur normalisiert werden. Ändert sich die so um die Umgebungstemperatur bereinigte Lagertemperatur im Mittel nur um wenige Grad Kelvin, kann das ein Indiz dafür sein, dass das Lager ein technisches Problem hat und gegebenfalls in mittelfristiger Zukunft ausgetauscht werden muss.

Mit Hilfe der gleichzeitigen Überwachung der Lagertemperatur als auch der Gondeltemperatur und der Auswertung einer aus der Differenz oder einem Verhältnis der beiden Temperaturen gebildeten Normtemperatur ist es möglich, bereits geringe Lagerschädigungen zu einem möglichst frühen Zeitpunkt zu detektieren. Dann ist es möglich, den Anlagenstopp zu vermeiden und gegebenenfalls erforderliche Instandhaltungsmaßnahmen frühzeitig zu disponieren.

Es ist erkannt worden, dass durch eine kombinierte Auswertung zumindest der Lagertemperatur als auch der Gondeltemperatur die jahreszeitbedingte Temperaturschwankung als auch die tageszeitbedingte Temperaturschwankung des Lagers ausgeblendet werden kann. Die gemeinsame Betrachtung führt dazu, dass die gemessene Lagertemperatur in eine nur den Reibungsverlust an dem Lager wiedergebende Temperatur umgewandelt werden kann. Diese tatsächliche Lagertemperatur kann als Normtemperatur verstanden werden.

Es wird eine Differenz oder ein Verhältnis von Lagertemperatur und Gondeltemperatur als Normtemperatur bestimmt. Insbesondere ist es möglich, entweder das Verhältnis oder die Differenz von Lagertemperatur und Gondeltemperatur zu errechnen. Die Normtemperatur ist dann nicht mehr abhängig von der Umgebungstemperatur bzw. der Gondeltemperatur, da die auf Grund der Umgebungstemperatur bedingte Veränderung der Lagertemperatur kompensiert ist. Die Normtemperatur stellt die auf Grund der Reibungsverluste sich einstellende Temperatur am Lager, unabhängig von der Umgebungstemperatur, dar.

Mit Hilfe des so ermittelten Normtemperaturwertes kann das Lager erheblich präziser in seiner Funktionsfähigkeit bewertet werden. Veränderungen in der Normtemperatur können dazu verwendet werden, frühzeitig auf ein technisches Problem innerhalb des Lagers bzw. ein bevorstehendes Ende der Gebrauchsdauer zu schließen.

Die Lagertemperatur wird zusammen mit der Gondeltemperatur statistisch ausgewertet. Hierbei werden Mittelwerte für vorbestimmte Zeitintervalle bestimmt. Vorbestimmte Zeitintervalle können dabei Tage, Wochen oder Monate sowie Quartale sein. Mittelwerte können als arithmetisches Mittel sowohl für die gemessenen Temperaturen als auch die Normtemperatur, welche die Differenz von gemessener Lagertemperatur und der gemessenen Gondeltemperatur ist, berechnet werden. Insbesondere ist es möglich, aus einer Häufigkeitsverteilung über ein vorbestimmtes Zeitintervall den Mittelwert der jeweiligen Temperatur bzw. der Normtemperatur zu bestimmen. Auch können die ermittelten Mittelwerte der gemessenen Temperaturen dazu verwendet werden, den Mittelwert der Normtemperatur zu berechnen.

Beispielsweise ist ein Zeitintervall ein Monat. Jeweils am Ende eines solchen Zeitintervalls werden alle Werte der Normtemperatur summiert und durch die Anzahl der Messwerte dividiert. Das sich so ergebende vorzugsweise arithmetische Mittel stellt den Mittelwert für die Normtemperatur in diesem Zeitintervall dar. Nach einem erneuten Zeitintervall kann ein neuer Mittelwert errechnet werden. Dies führt dazu, dass eine Vielzahl von Mittelwerten für jeweils ein Zeitintervall über einen längeren Zeitraum bestimmt werden kann.

Die bestimmten Mittelwerte ermöglichen es, einen Verlauf der Mittelwerte für die Normtemperatur über eine Mehrzahl von Zeitintervallen auszuwerten. So ist es möglich, dass die Auswertung über mehrere Zeitintervalle durchgeführt wird, wobei jedem Zeitintervall ein Mittelwert der Normtemperatur zugeordnet wird. Dabei ist es möglich, dass zunächst der Betrag des Mittelwertes ausgewertet wird. Es ist möglich, über die Mehrzahl der Zeitintervalle die Mittelwerte erneut zu ermitteln. Der Betrag eines aktuellen Mittelwerts kann mit diesem gemittelten Mittelwert verglichen werden. Ist der Betrag des aktuellen Mittelwertes absolut oder prozentual größer als der gemittelte Mittelwert, kann beispielsweise ein Alarmsignal ausgegeben werden. Auch ist die zeitliche Veränderung des Mittelwerts über zumindest zwei Zeitintervalle hinweg als Maß für Funktionsfähigkeit des Lagers nutzbar. Insofern ist es möglich, dass eine Veränderung des Mittelwertes ausgewertet wird, insbesondere eine zeitliche Veränderung. Hierbei kann eine Steilheit der Veränderung ausgewertet werden, insbesondere durch eine zeitliche Ableitung. Ist die Steilheit der Änderung größer als ein vorbestimmter Grenzwert, kann ebenfalls auf ein Problem im Wälzlager geschlossen werden.

Gemäß einem Ausführungsbeispiel wird vorgeschlagen, dass ein Durchschnittswert des Mittelwerts aus Mittelwerten der Normtemperatur von vergangenen Zeitintervallen bestimmt wird. Wie soeben beschrieben, kann dieser gemittelte Mittelwert aus zumindest zwei oder einer Mehrzahl von Mittelwerten von vergangenen Zeitintervallen bestimmt werden. Die prozentuale oder absolute Abweichung eines aktuellen Mittelwertes von diesem Durchschnittswert kann ausgewertet werden.

Gemäß einem Ausführungsbeispiel wird vorgeschlagen, dass abhängig von der Abweichung des aktuellen Mittelwertes von dem Durchschnittswert ein Warnsignal ausgegeben wird. Hierbei kann beispielsweise eine Abweichung des Mittelwertes um einen Grenzwert, z.B. 5 Kelvin gegenüber dem Durchschnittswert als derart relevant eingestuft werden, dass das Warnsignal ausgegeben wird. Auch ist es möglich, dass die Abweichung beispielsweise 40% oder größer gegenüber dem Durchschnittwert der Mittelwerte liegt und dann ein entsprechendes Warnsignal ausgegeben wird.

Auch ist es möglich, dass abhängig vom Betrag des Mittelwertes ein Warnsignal ausgegeben wird. Hierbei ist es beispielsweise möglich, dass der Betrag des Mittelwertes einen Grenzwert überschreiten muss.

Das Maß der Abweichung des aktuellen Mittelwertes von dem Durchschnittswert und/oder der Grenzwert kann abhängig von einer Fettanalyse des Schmierfetts des Wälzlagers bestimmt werden. Die Frage, wann ein Warnsignal ausgelöst wird oder eine Wartung/Instandsetzung veranlasst wird hängt von dem Überschreiben des Grenzwertes ab. Da die gegenständliche Analyse eine Langzeitbetrachtung ist, kann die Wahl des Grenzwertes einer regelmäßigen Überprüfung unterzogen werden. Hierbei kann auch eine Fettanalyse nützlich sein. Es ist erkannt worden, dass die Auswertung von Fettanalysen in Kombination mit der Temperaturüberwachung eine Präzisierung der Zustandsbewertung als auch der Festlegung des Grenzwertes ermöglicht. Sobald die Lagerschädigung beginnt, entsteht vermehrt metallischer Abrieb, der in den Fettanalysen bestimmt wird. Bei Lagern, die kontinuierlich mit frischem Schmierstoff versorgt werden, ist der Abrieb, der zu einem gewissen Zeitpunkt gemessen wird, ein Indikator für den Start der Lagerschädigung. Zeigt ein Lager die Tendenz eines Temperaturanstiegs, kann durch die gezielte Durchführung einer Fettanalyse die Zustandsbewertung des Lagers unterstützt werden. Zeigt die Fettanalyse keine erhöhten Werte, obwohl die Temperatur bereits einen Grenzwert überschritten hat, kann dies zu einem Anheben des Grenzwertes für die Temperatur führen, da offensichtlich trotz der erhöhten Temperatur noch keine mechanisch relevanten Lagerschäden aufgetreten sind.

Gemäß einem Ausführungsbeispiel wird vorgeschlagen, dass abhängig von der Anzahl und oder des Betrags der Abweichungen aktueller Mittelwerte von dem Durchschnittswert nach oben in aufeinander folgenden Zeitintervallen ein Warnsignal ausgegeben wird. Es ist erkannt worden, dass wenn der Mittelwert über mehrere Zeitintervalle hinweg, beispielsweise zwei oder drei aufeinanderfolgende Zeitintervalle, vom dem Durchschnittwert nach oben abweicht, ein potenzielles Problem an dem Wälzlager besteht. Wenn beispielsweise in zwei, drei oder mehr aufeinanderfolgenden Zeitintervallen der Mittelwert über dem Durchschnittswert liegt, kann das Warnsignal ausgegeben werden. Hierbei kann darüber hinaus auch berücksichtig werden, ob der Betrag der Abweichung des aktuellen Mittelwertes über einer Schwelle liegt. Nur wenn der Betrag der Abweichung über dem Durchschnittwert liegt, und dies in mehreren aufeinanderfolgenden Zeitintervallen geschieht, kann beispielsweise das Warnsignal ausgegebenen werden.

Die Bestimmung der Normtemperatur ist nur dann sinnvoll, wenn die Windkraftanlage in Betrieb ist. Ansonsten würde dieser Messwert zu einer verfälschten Aussage über den Durchschnittswert führen, da bei einer fehlenden mechanischen Belastung des Lagers dieses eine erheblich kleinere Temperatur hat, als bei vorliegender Belastung. Insofern wird vorgeschlagen, dass ein Wert der Normtemperatur nur dann bestimmt wird, wenn eine elektrische Leistungsangabe der Turbine größer als ein Grenzwert, vorzugsweise größer null Watt ist. Es ist beispielsweise möglich, dass alle 10 Minuten Messwerte über die Lagertemperatur als auch die Gondeltemperatur ausgegeben werden. Diese Messintervalle können minütlich, 10-minütlich, viertelstündlich, halbstündlich oder stündlich sein. Für jedes Messintervall wird überprüft, ob die mittlere elektrische Leistungsabgabe innerhalb dieses Messintervalls ebenfalls größer als ein Grenzwert, z.B. 1000, 500 oder 0 Kilowatt war. In diesem Fall wird das Messintervall als relevant qualifiziert und die Normtemperatur kann bestimmt werden. Ansonsten bleibt die gemessene Temperatur des Messintervalls unberücksichtigt für das Zeitintervall.

Innerhalb eines Zeitintervalls, beispielsweise eines Monats, liegt dann eine große Anzahl an Normtemperaturwerte vor, jeweils für ein gültiges Messintervall. Alle diese gemessenen und ermittelten Normtemperaturen werden dann verwendet, um den Mittelwert über das Zeitintervall zu bestimmen. Insbesondere ist es auch möglich, eine Häufigkeit zur Verteilung über die bestimmten Normtemperaturen zu erstellen.

Bei kürzeren Zeitintervallen, beispielsweise bei Zeitintervallen von einem Tag oder einer Woche kann es dazu kommen, dass nur sehr wenige gültige Messwerte vorliegen. Dies kann insbesondere in Zeiten der Windflaute der Fall sein. Dann kann es sein, dass die vorliegenden gültigen Messwerte keine verlässliche Aussage erlauben. Um solche Zeitintervalle bei der zukünftigen Betrachtung außeracht lassen zu können, wird vorgeschlagen, dass ein Mittelwert für ein Zeitintervall bei der Auswertung nur berücksichtig wird, wenn eine vorbestimmt Anzahl an Werten für die Normtemperatur innerhalb des Zeitintervalls einen Grenzwert übersteigen. Das heißt, dass die Anzahl der gültigen Messintervalle in dem Zeitintervall einen Grenzwert übersteigen müssen. Beispielsweise ist es notwendig, dass mindestens 50% aller Messintervalle innerhalb einem Zeitintervall gültig waren. Nur dann wird dieses Zeitintervall für die Betrachtung von zukünftigen Messwerten berücksichtigt.

Auch ist erkannt worden, dass zu Beginn des Betriebs einer Windkraftanlage, insbesondere bei der Erstinbetriebnahme oder nach dem Wechsel des Lagers dieses zunächst eine gewisse Einlaufzeit benötigt. Während dieser Einlaufzeit können etwas höhere Reibungsverluste auftreten, die zu einer erhöhten Normtemperatur führen. Diese erhöhte Normtemperatur ist dann aber nicht durch ein technisches Problem des Wälzlagers bedingt, sondern lediglich durch die Notwendigkeit des Einlaufens. Würden diese Messwerte bei der zukünftigen Betrachtung berücksichtigt, so läge der Durchschnittwert gegebenenfalls etwas zu hoch. Aus diesem Grunde wird vorgeschlagen, dass ein Mittelwert für ein Zeitintervall nur für Zeitintervalle bestimmt wird, welche einen zeitlichen Mindestabstand zu einer Erstinbetriebnahme des Lagers haben. Beispielsweise kann erst ab dem zweiten oder dritten Zeitintervall die tatsächliche Auswertung stattfinden und die Durchschnittswerte erst ausgehend von dem zweiten oder dritten Zeitintervall nach der Erstinbetriebnahme des Lagers berücksichtigt werden.

Es wird vorgeschlagen, dass die Normtemperatur in Abhängigkeit von einer gemessenen Windgeschwindigkeit ausgewertet wird, insbesondere dass Gruppen von Windgeschwindigkeitsbereichen gebildet werden und die gemessenen Normtemperaturen für die statistische Auswertung jeweils einer der Gruppen abhängig von der gemessenen Windgeschwindigkeit zugeordnet werden. Da Windturbinen aufgrund ihres Arbeitsprinzips den größten Rotorschub im Bereich der Windgeschwindgeschwindigkeit erreichen, bei der die elektrische Nennleistung erstmals erreicht wird, entstehen hier die größten axialen Rotorlagerkräfte. In der Folge treten hier höhere Lagertemperaturen auf als bei niedrigeren oder höheren Windgeschwindigkeiten. Geschädigte Lager lassen sich so einfacher identifizieren.

Insbesondere lassen sich die ermittelten Normtemperaturen jeweils einer der Gruppen zuordnen. Durch dieses sogenannte Binning kann ein Vergleich von statistischen Werten derart erfolgen, dass dieser Vergleich nur für ähnliche Betriebsbedingungen, hier die Windgeschwindigkeit, durchgeführt wird.

Vorzugsweise erfolge ein Vergleich von Mittelwerten der Normtemperaturen innerhalb jeweils einer Gruppen von Windgeschwindigkeitsbereichen. Es ist davon auszugehen, dass z.B. bei geringen Windgeschwindigkeiten die Normtemperatur im Mittel ohnehin geringer ist, als bei Windgeschwindigkeiten nahe der Nennleistung. Dieser Unterschied macht einen statistischen Vergleich weniger genau, da er in die Betrachtung zunächst mit einbezogen werden muss.

Auch lassen sich für verschiedene Windgeschwindigkeitsbereiche verschiedene Grenzwerte der Lagertemperaturen und Normtemperaturen festlegen. Es ist davon auszugehen, dass bei Leistungen nahe der Nennleistung die höchste Belastung stattfindet, und die Lager in diesem Fall im Mittelwert am wärmsten sind. Dieser Temperaturanstieg gegenüber geringen Windlasten ist aber gerade nicht auf eine Alterung des Lagers zurückzuführen. Um die Ausgabe eines Warnsignals oder das Veranlassen einer Instandsetzung genauer zu machen, erfolgt die Festsetzung eines Grenzwertes vorzugsweise für jede Klasse/Gruppe von Windgeschwindigkeiten separat.

Die für die Auswertung notwendigen Temperaturen können beispielsweise aus einem SCADA Datensatz ermittelt werden. Ein sogenanntes Supervision Control And Data Aquisition System liefert eine große Anzahl an Datensätzen von Messpunkten. Im Bereich von Windkraftanlagen sind dies unter anderem auch die Lagertemperatur als auch die Gondeltemperatur sowie die elektrische Leistung. Aus den SCADA Datensätzen können die notwendigen Informationen ausgelesen werden und für die nachfolgende Auswertung berücksichtigt werden.

Die Auswertung der Normtemperatur kann im Verhältnis zu Windturbinen eines gleichen Windparks durchgeführt werden. Durch den Vergleich des Temperaturverhaltens verschiedener Windturbinen des gleichen Windparks während eines Betriebsintervalls lässt sich die Analysegüte weiter steigern. Durch die annähernd gleichen Windverhältnisse ergeben sich ähnliche Betriebs- und Belastungsbedingungen. Der Vergleich der Windturbinen untereinander kann die Identifizierung eines geschädigten Lagers erleichtern. Turbinen eines Windparks habe in der Regel ein ähnliches Nutzungsprofil, so dass ein Vergleich innerhalb eines Windparks bessere Aussagen darüber erlaubt, ob eine Turbine ggf. gegenüber gleichartigen anderen Turbinen einem erhöhtem Verschleiß unterliegt.

Auch kann die Auswertung der Normtemperatur abhängig von einer relativen Position zweier Windturbinen zueinander durchgeführt wird. Die Entfernung zweier Windturbinen in einem Windpark kann auch relevant sein für eine Auswertung. Nah beieinanderstehende Windturbinen haben ein ähnlicheres Nutzungsprofil als weit auseinander stehende Windturbinen. Ein relativer Abstand von Windturbinen zueinander kann durch eine Wichtung der Messerwert oder Mittelwerte genutzt werden.

Auch wird vorgeschlagen, dass die Lagertemperatur an dem Lager der Windturbine gemessen wird.

Ein weiterer Aspekt ist ein System eingerichtet zur Überwachung des Zustands eines Wälzlagers in einer Windturbine umfassend zur Erfassung einer Lagertemperatur an einem Wälzlager und Mittel zur Erfassung einer Gondeltemperatur in einer das Wälzlager einhausenden Gondel der Windturbine. Es wird vorgeschlagen, dass mittels Auswertmitteln eingerichtet zum Auswerten der Lagertemperatur zusammen mit der Gondeltemperatur, der Zustand des Wälzlagers bestimmt wird.

Zuvor wurden die Begriffe Windturbine, Windenergieanlage als auch Windkraftanlage verwendet. Diese Begriffe stehen alle synonym für eine Anlage zur Erzeugung elektrischer Leistung aus Windkraft.

Die zuvor genannten Verfahren können auch als Computerprogramm oder als auf einem Speichermedium gespeichertes Computerprogramm realisiert werden. Hierbei kann in der Zentrale ein Mikroprozessor zur Durchführung der jeweiligen Verfahrensschritte durch ein Computerprogramm geeignet programmiert sein.

Nachfolgend wird der Gegenstand anhand einer Ausführungsbeispiele zeigenden Zeichnung näher erläutert. In der Zeichnung zeigen:
- Fig. 1: eine schematische Ansicht einer Windturbine samt Gondel;
- Fig.2a: einen Temperaturverlauf eines Wälzlagers in der Windturbine;
- Fig. 2b: einen Temperaturverlauf in der Gondel einer Windturbine;
- Fig. 2c: einen normalisierten Temperaturverlauf;
- Fig. 3a: einen normalisierten Temperaturverlauf über eine Mehrzahl von Zeitintervallen;
- Fig. 3b: einen weiteren normalisierten Temperaturverlauf über eine Mehrzahl von Intervallen;
- Fig. 4: eine Verteilung von Normtemperaturen für verschiedene Windgeschwindigkeiten

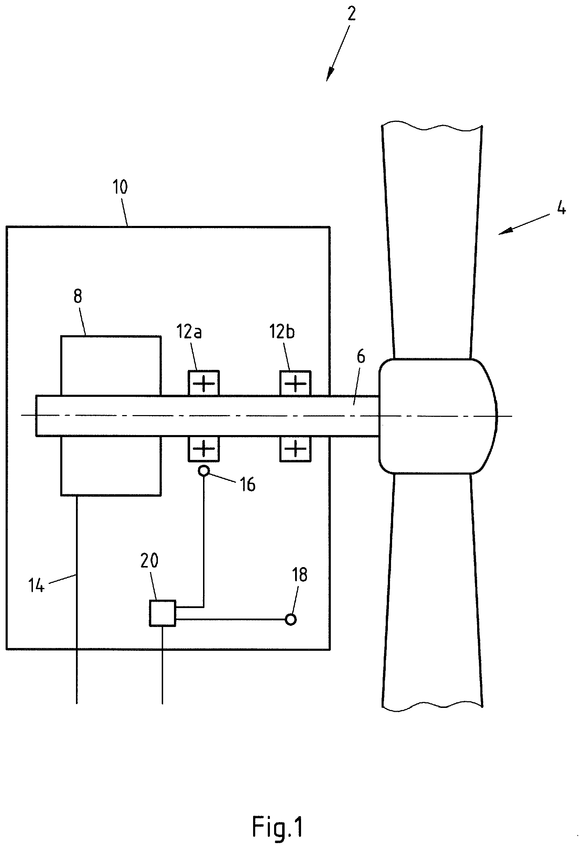

Figur 1 zeigt schematisch einen Teil einer Windturbine 2. Die Windturbine 2 weist ein Windrad 4 auf. Das Windrad 4 ist über eine Welle 6 mit einem Generator 8 verbunden. Die Welle 6 ist in Teilen und der Generator 8 ist vollständig innerhalb eines Gehäuses 10 einer Gondel eingebaut.

Der in dem Gehäuse 10 geführte Teil der Welle 6 ist über Wälzlager 12a, 12b, insbesondere Rollenlager, gelagert. In dem Generator 8 wird die aus der Windenergie über das Windrad 4 gewonnene Rotationsenergie in elektrische Energie umgewandelt und, wie schematisch dargestellt, über ein Kabel 14 einem Umrichter zugeleitet.

An den Lagern 12a, 12b, insbesondere an zumindest einem der Lager 12a, 12b ist ein Temperatursensor 16 angeordnet. In dem Gehäuse 10 ist ein weiterer Temperatursensor 18 angeordnet. Die Messwerte der Temperatursensoren 16,18 werden einem Messwertaufnehmer 20 zugeleitet. Darüber hinaus wird von dem Generator 8 oder einer anderen Stelle dem Messwertaufnehmer 20 eine Information darüber zugeleitet, ob der Generator 8 elektrische Leistung erzeugt. Neben diesen Werten wird eine Vielzahl weiterer Werte dem Messwertaufnehmer zugeleitet. Dieser übermittelt die Messwerte entweder drahtgebunden oder drahtlos an eine Zentrale (nicht dargestellt). In diesem zentralen Steuerrechner werden die Daten in einem SCADA Datensatz gespeichert. Das SCADA System speichert für definierte Beobachtungszeiträume (Messintervalle), beispielsweise jeweils 10 Minuten die Mittelwerte der verschiedenen Messwerte, die vom Messwertaufnehmer 20 übermittelt werden. Gegenständlich wird vorgeschlagen, dass die Werte der Temperatursensoren 16 und 18 als auch eines Leistungssensors (nicht dargestellt) gemeinsam ausgewertet werden. Diese Werte werden für jedes Beobachtungsintervall aus dem SCADA Datensatz ausgelesen.

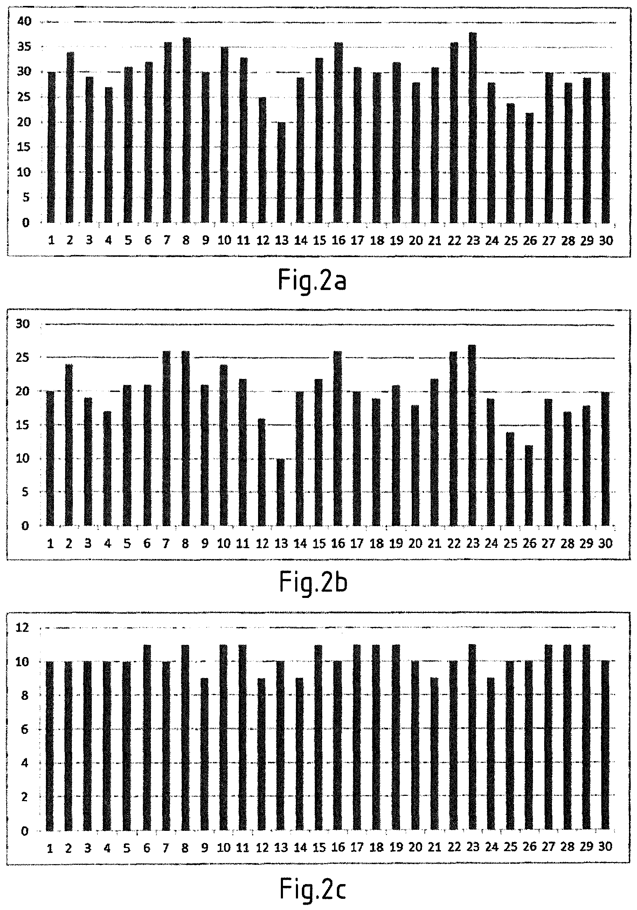

Anschließend ist es möglich, wie in der Figur 2a dargestellt, für jeweils mehrere Zeiträume Messwerte aus den Beobachtungsintervallen zu ermitteln. In den Figuren 2a bis 2c sind beispielsweise 30 Tage aufgezeichnet, wobei jeweils ein Tag einen Zeitraum darstellt. Die 30 Tage stellen ein Zeitintervall da, welches nachfolgend noch diskutiert werden wird.

In der Figur 2a ist die Temperatur des Temperatursensors 16 aufgetragen. Hierbei ist für jeden Zeitraum der Messwert des Temperatursensors 16 über alle Beobachtungsintervalle gemittelt worden. In dem vorliegenden Beispiel ist somit für jeden Tag der aufgezeichneten 30 Tage des Zeitintervalls ein mittlerer Temperaturwert des Temperatursensors 16 aufgetragen. Zu erkennen ist, dass dieser Temperaturwert Schwankungen von mehreren Grad Celsius unterliegt. Im Beispiel schwankt der Messwert um die 30 Grad Celsius, dieses ist jedoch nur beispielhaft. Zu erkennen ist, dass die Schwankungsbreite erheblich ist und somit erhebliche Amplituden zwischen zwei Zeiträumen vorliegen. Diese Unterschiede in den Temperaturen des Lagers 12a, welche durch den Temperatursensor 16 aufgenommen werden, liegen einerseits an der mechanischen Belastung des Lagers und andererseits beispielsweise auch an der Umgebungstemperatur in der Gondel.

Zu der Figur 2a sei angemerkt, dass die Beobachtungsintervalle für die Bildung des jeweiligen Mittelwerts für einen Zeitraum nur dann berücksichtigt werden, wenn der Messwertaufnehmer 20 von dem Leistungssensor eine Leistung des Generators 8 P >0 Watt bzw. eines entsprechend gewählten Schwellwertes gemessen hat. Insbesondere sind Messwerte der Temperatursensoren 16 und 18 irrelevant für ein Beobachtungsintervall, wenn der Generator 8 keine Leistung geliefert hat. Dies gilt auch für die nachfolgende Betrachtung.

Figur 2b zeigt die Temperatur, welche am Temperatursensor 18 aufgenommen wurde. Erneut sind beispielhaft Beobachtungsintervalle von 10 Minuten berücksichtigt. Innerhalb eines Zeitraums von einem Tag sind 6 Beobachtungsintervalle pro Stunde und insgesamt 144 Beobachtungsintervalle pro Tag möglich. In jedem Beobachtungsintervall, in dem die Leistung des Generators 8 größer 0 Watt ist, werden Messwerte ausgewertet. Dies gilt jedoch insbesondere für den Temperatursensor 16. Über alle Beobachtungsintervalle eines Zeitraums werden die Temperaturmesswerte gemittelt und wie in Figur 2b für 30 Zeiträume innerhalb eines Zeitintervalls aufgetragen. Auch hier ist zu erkennen, dass die Temperatur der Gondel Schwankungen unterliegt. Diese Schwankungen können einerseits durch erhöhte Temperatur des Lagers 12a, andererseits jedoch auch durch Wettereinflüsse bedingt sein.

Gegenständlich ist erkannt worden, dass eine normalisierte Temperatur zumindest eines Lagers 12 dann eine Aussage über den Zustand des Lagers 12 ermöglicht, wenn diese normalisierte Temperatur die tatsächliche Temperaturschwankung am Lager 12 berücksichtigt. Aus diesem Grunde wird für jeden Zeitraum die Temperatur der Gondel vom Temperatursensor 18 von der Temperatur des Lagers 12 vom Sensor 16 abgezogen. Ein Differenzwert kann für jeden Zeitraum, wie in Figur 2c dargestellt ist, aufgetragen werden. Zu erkennen ist in der Figur 2c, dass die Schwankungsbreite abnimmt und beispielhaft die Temperatur um einen Wert von ca. 10 Grad Kelvin in einer Schwankungsbreite von +/- 2 Grad variiert.

Nachdem für einen Zeitraum von beispielsweise einen Tag, einer Woche, einen Monat oder einen sonstigen Zeitraum die jeweilige Temperatur wie in Figur 2c dargestellt ist erfasst wurde, kann hieraus ein Mittelwert errechnet werden. Dieser Mittelwert ist repräsentativ für die Temperatur am Lager 12 unter Berücksichtigung der Gondeltemperatur. Dieser gemittelte Wert stellt einen Temperaturwert für ein Zeitintervall dar. Das Zeitintervall ist beispielsweise einen Monat, und es wird wie für die Figuren 2a bis 2c beschrieben, jeweils für ein neues Zeitintervall ein neuer Mittelwert errechnet.

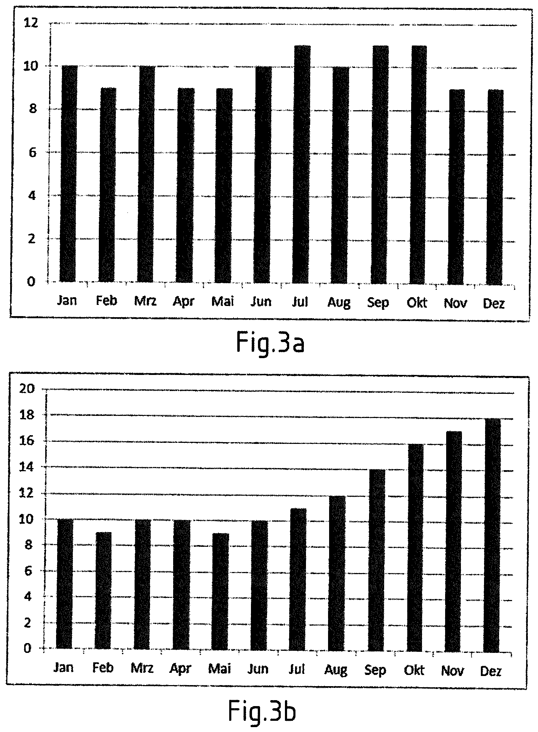

Ein solcher Mittelwert wird, wie in der Figur 3a dargestellt, für aufeinanderfolgende Zeitintervalle ausgewertet. In der Figur 3a ist zu erkennen, dass der normierte Mittelwert für ein jeweiliges Zeitintervall ebenfalls um die 10 Grad Kelvin schwankt.

In der Figur 3a sind Zeitintervalle Januar bis Dezember aufgetragen. Da durch die Normalisierung der Temperatur gemäß Figur 2c die Umgebungstemperatur unberücksichtigt bleibt, unterliegt die mittlere Temperatur für jedes Zeitintervall nicht mehr jahreszeitbedingten Schwankungen. Figur 3a zeigt den Verlauf der normalisierten Temperatur über 12 Zeitintervalle eines Lagers 12, welches keinen Defekt hat. Zu erkennen ist, dass die Temperatur beständig mit einer Schwankungsbreite von +/- 2 Grad Kelvin um einen Mittelwert, beispielsweise 10 Grad, schwankt. Diese Schwankung wird als unkritisch qualifiziert und der Zustand des Lagers 12 als in Ordnung ausgegeben.

Figur 3b zeigt ein weiteres Beispiel eines anderen Lagers 12, welches einen Defekt aufweist. Hier ist zu erkennen, dass zunächst für die Zeitintervalle Januar bis August die Temperaturschwankungen um den Wert von beispielsweise 10 Grad Kelvin konstant bleibt. Anschließend ist für die Monate September bis Dezember zu erkennen, dass die Steilheit der Kurve stark ins Positive schwenkt. Von einer Steilheit der Kurve die um die Null wechselt in der Darstellung die Steilheit der Kurve auf beispielsweise 2 Grad pro Zeitintervall, insbesondere 2 Grad pro Monat.

Es ist erkannt worden, dass wenn ein Grenzwert für diese Steilheit festgelegt wird, insbesondere in Grad Kelvin pro Monat und dieser Grenzwert überschritten wird, auf einen nahenden Schaden des Lagers 12 geschlossen werden kann. Ein solcher Grenzwert kann beispielsweise 2 Grad Kelvin oder 3 Grad Kelvin pro Zeitintervall, insbesondere pro Monat, betragen. Insbesondere sind Steilheiten größer als 2 Grad pro Zeitintervall ein gutes Maß für die Feststellung einer nahenden Beschädigung eines Lagers. Falls eine solche Steilheit detektiert wird, kann ein Warnsignal ausgegeben werden.

Auch ist es möglich, wie beispielsweise in der Figur 3b für die Monate Oktober bis Dezember dargestellt, dass der Betrag der Temperatur beispielsweise ein Grenzwert, hier beispielsweise 40 % des durchschnittlichen Mittelwertes überschreitet. Im gegebenen Beispiel wäre der Grenzwert eine Temperatur von 14 Grad. Wird diese Temperatur überschritten, so kann ebenfalls auf einen nahenden Ausfall des Lagers geschlossen werden.

Auch ist es möglich, dass eine Kombination aus dem Betrag der Temperatur und der Steilheit verwendet werden kann. So ist beispielsweise ein Produkt aus Steilheit und Betrag der Temperatur ein mögliches Maß für eine nahende Beschädigung des Lagers. Beispielsweise ist es möglich, dass der Betrag der Temperatur das 1,4fache oder das 1,5fache des durchschnittlichen Mittelwertes ist. Gegebenenfalls ist hier der Mittelwert 10 Grad Kelvin. Wenn das Produkt aus Steilheit mal betragsmäßiger Abweichungen vom Mittelwert beispielsweise größer 2,8 ist, kann auf eine nahende Beschädigung des Lagers geschlossen werden.

Figur 3b zeigt auch, dass die Temperatur des Lagers weiter ansteigt. In diesem Fall ist auch zu erkennen, dass das Lager noch mehrere Monate nachdem beispielsweise in der Figur 3b im September festgestellt wurde, dass das Lager defekt ist, dieses weiter betrieben werden kann. Somit existiert eine Vorlaufzeit von einigen Monaten um den Austausch des Lagers zu planen.

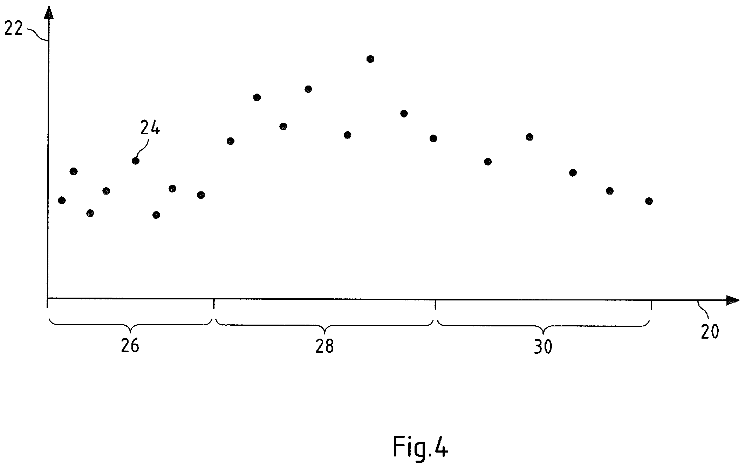

Fig. 4 zeigt eine statistische Verteilung von gemessenen Normtemperaturen 24 einer Windturbine bei verschiedenen Windgeschwindigkeiten. Auf der Abzisse 20 ist die Windgeschwindigkeit aufgetragen, auf der Ordinate 22 Temperaturen. Punkte 24 zeigen ermittelte Normtemperaturen zu bestimmten Zeitpunkten. Erkennbar ist, dass die Normtemperaturen 24 in einem mittleren Bereich 28 der Windgeschwindigkeit, also wenn in etwa Nennleistung erreicht wird, am höchsten sind. Mit steigenden Windgeschwindigkeiten werden die Rotorblätter der Turbine gepitch, so dass die Windlast reduziert wird. Unterteilt man die Windgeschwindigkeiten z.B. in drei Bereiche 26, 28, 23 so ist eine statistische Auswertung im Sinne des Gegenstandes für jeweils eine der Klassen möglich, und etwaige Einflüsse durch verschiedene Windlasten sind teilweise kompensiert.

Durch die gegenständliche Möglichkeit, frühzeitig den nahenden Schaden eines Lagers feststellen zu können ist es möglich, Stillstandzeiten einer Windturbine zu minimieren. Außerdem kann eine Instandsetzung und ein Austausch eines Lagers frühzeitig geplant werden, ohne dass die Windturbine über einen langen Zeitraum mit geringer Leistung gefahren werden muss oder gar abgeschaltet werden muss.

## Patentansprüche

1. Verfahren zur Überwachung des Zustands eines Wälzlagers (12) in einer Windturbine (2) umfassend:
- Erfassen einer Lagertemperatur an dem Wälzlager (12), **gekennzeichnet durch**
- Erfassen einer Gondeltemperatur in einer das Wälzlager (12) einhausenden Gondel der Windturbine (2),
- Auswerten der Lagertemperatur zusammen mit der Gondeltemperatur zur Bestimmung des Zustands des Wälzlagers (12), wobei eine Differenz oder ein Verhältnis von Lagertemperatur und Gondeltemperatur als Normtemperatur bestimmt wird und zur Auswertung verwendet wird, und wobei
- ein Mittelwert für die Normtemperatur für ein vorbestimmtes Zeitintervall bestimmt wird.

2. Verfahren nach Anspruch 1, **dadurch gekennzeichnet, dass** die Lagertemperatur zusammen mit der Gondeltemperatur statistisch ausgewertet wird und dass insbesondere Mittelwerte für vorbestimmte Zeitintervalle bestimmt werden.

3. Verfahren nach einem der vorangehenden Ansprüche, **dadurch gekennzeichnet, dass** ein Verlauf der Mittelwerte für die Normtemperatur über eine Mehrzahl von Zeitintervallen ausgewertet wird, wobei insbesondere der Betrag des Mittelwertes und/oder eine Veränderung des Mittelwertes ausgewertet wird.

4. Verfahren nach einem der vorangehenden Ansprüche, **dadurch gekennzeichnet, dass** ein Durchschnittswert des Mittelwerts aus Mittelwerten der Normtemperatur von vergangenen Zeitintervallen bestimmt wird und dass eine Abweichung eines aktuellen Mittelwertes von dem Durchschnittswert ausgewertet wird.

5. Verfahren nach einem der vorangehenden Ansprüche, **dadurch gekennzeichnet, dass** ein gleitender Durchschnittswert aus einer bestimmten Anzahl von vergangenen Zeitintervallen bestimmt wird und dass eine Abweichung eines aktuellen Mittelwertes von dem gleitenden Durchschnittswert ausgewertet wird.

6. Verfahren nach einem der vorangehenden Ansprüche, **dadurch gekennzeichnet, dass** abhängig von der Abweichung des aktuellen Mittelwertes von dem Durchschnittswert und/oder abhängig von dem Betrag des Mittelwertes ein Warnsignal ausgegeben wird, insbesondere wenn die Abweichung des aktuellen Mittelwertes von dem Durchschnittswert mehr als 40% beträgt und/oder der Betrag des Mittelwertes einen Grenzwert überschreitet.

7. Verfahren nach einem der vorangehenden Ansprüche, **dadurch gekennzeichnet, dass** das Maß der Abweichung des aktuellen Mittelwertes von dem Durchschnittswert und/oder der Grenzwert abhängig von einer Fettanalyse des Schmierfetts des Wälzlagers (12) bestimmt wird.

8. Verfahren nach einem der vorangehenden Ansprüche, **dadurch gekennzeichnet, dass** abhängig von der Anzahl und/oder des Betrags der Abweichungen aktueller Mittelwerte von dem Durchschnittswert nach oben in aufeinanderfolgenden Zeitintervallen ein Warnsignal ausgegeben wird.

9. Verfahren nach einem der vorangehenden Ansprüche, **dadurch gekennzeichnet, dass** die Normtemperatur nur dann bestimmt wird, wenn eine elektrische Leistungsabgabe der Windturbine (2) größer Null oder einem anderen festgelegten Schwellwert ist.

10. Verfahren nach einem der vorangehenden Ansprüche, **dadurch gekennzeichnet, dass** die Normtemperatur in Abhängigkeit von einer gemessenen Windgeschwindigkeit ausgewertet wird, insbesondere dass Gruppen von Windgeschwindigkeitsbereichen gebildet werden und die gemessenen Normtemperaturen für die statistische Auswertung jeweils einer der Gruppen abhängig von der gemessenen Windgeschwindigkeit zugeordnet werden.

11. Verfahren nach einem der vorangehenden Ansprüche, **dadurch gekennzeichnet, dass** ein Vergleich von Mittelwerten der Normtemperaturen innerhalb jeweils einer Gruppen von Windgeschwindigkeitsbereichen durchgeführt wird.

12. Verfahren nach einem der vorangehenden Ansprüche, **dadurch gekennzeichnet, dass** ein Mittelwert für ein Zeitintervall bei der Auswertung nur berücksichtigt wird, wenn eine Anzahl an bestimmten Werten für die Normtemperatur einen Grenzwert übersteigen.

13. Verfahren nach einem der vorangehenden Ansprüche, **dadurch gekennzeichnet, dass** ein Mittelwert für ein Zeitintervall nur für Zeitintervalle bestimmt wird, welche einen zeitlichen Mindestabstand zu einer Erstinbetriebnahme des Wälzlagers (12) haben.

14. Verfahren nach einem der vorangehenden Ansprüche, **dadurch gekennzeichnet, dass** die Auswertung der Normtemperatur im Verhältnis zu Windturbinen (2) eines gleichen Windparks durchgeführt wird und/oder dass die Auswertung der Normtemperatur abhängig von einer relativen Position zweier Windturbinen (2) zueinander durchgeführt wird.

15. Verfahren nach einem der vorangehenden Ansprüche, **dadurch gekennzeichnet, dass** die Normtemperatur aus der Differenz der gemessenen Lagertemperatur und der gemessenen Gondeltemperatur bestimmt wird.

## Claims

1. Method for monitoring the status of a rolling bearing (12) in a wind turbine (2) comprising:
capturing a bearing temperature at the rolling bearing (12), **characterised by**
- capturing a nancelle temperature in a nancelle of the wind turbine (2) housing the rolling bearing (12),
- evaluating the bearing temperature and the nancelle temperature to determine the status of the rolling bearing (12),
wherein a difference or ratio between bearing temperature and nancelle temperature is determined as the standard temperature and used for evaluation, and wherein
- a mean value is determined for the standard temperature for a predetermined time interval.

2. Method according to claim 1, **characterised in that** the bearing temperature is statistically evaluated together with the nancelle temperature and that in particular mean values are determined for predetermined time intervals.

3. Method according to any one of the preceding claims, **characterised in that** a profile of the mean values for the standard temperature is evaluated over a plurality of time intervals, wherein in particular the magnitude of the mean value and/or a change in the mean value is evaluated.

4. Method according to any one of the preceding claims, **characterised in that** an average value of the mean value is determined from mean values of the standard temperature in previous time intervals and that a deviation of a current mean value from the average value is evaluated.

5. Method according to any one of the preceding claims, **characterised in that** a sliding average value is determined from a specific number of previous time intervals and that a deviation of a current mean value from the sliding average value is evaluated.

6. Method according to any one of the preceding claims, **characterised in that** a warning signal is given depending on the deviation of the current mean value from the average value and/or depending on the magnitude of the mean value, in particular if the deviation of the current mean value from the average value is more than 40% and/or the magnitude of the mean value exceeds a limit value.

7. Method according to any one of the preceding claims, **characterised in that** the magnitude of the deviation of the current mean value from the average value and/or the limit value is determined depending on an analysis of the grease on the rolling bearing (12).

8. Method according to any one of the preceding claims, **characterised in that** a warning signal is given at consecutive intervals depending on the number and/or magnitude of deviations of current mean values from the average value upwards.

9. Method according to any one of the preceding claims, **characterised in that** the standard temperature is only determined when an electrical output of the wind turbine (12) is greater than zero or another fixed threshold.

10. Method according to any one of the preceding claims, **characterised in that** the standard temperature is evaluated as a function of a measured wind speed, in particular that groups of wind speed ranges are formed and the measured standard temperatures are each assigned to one of the groups for the statistical evaluation depending on the measured wind speed.

11. Method according to any one of the preceding claims, **characterised in that** a comparison is made of mean values of the standard temperatures within a group of wind speed ranges.

12. Method according to any one of the preceding claims, **characterised in that** a mean value for a time interval is only taken into account in the evaluation if a number of specific values for the standard temperature exceed a limit value.

13. Method according to any one of the preceding claims, **characterised in that** a mean value for a time interval is determined only for time intervals which have a minimum time interval for initial commissioning of the rolling bearing (12).

14. Method according to any one of the preceding claims, **characterised in that** the evaluation of the standard temperature is performed in relation to wind turbines (2) in the same wind farm and/or that the evaluation of the standard temperature is performed depending on a position of two wind turbines (2) relative to each other.

15. Method according to any one of the preceding claims **characterised in that** the standard temperature is determined from the difference between the measured bearing temperature and the measured nancelle temperature.

## Revendications

1. Procédé de surveillance de l'état d'un palier à roulement (12) dans une turbine éolienne (2), ledit procédé consistant :
- à détecter une température de palier sur le palier à roulement (12),
**caractérisé**
- **par** la détection d'une température de nacelle dans une nacelle de la turbine éolienne (2), ladite nacelle logeant le palier à roulement (12),
- par l'évaluation de la température de palier effectuée en même temps que celle de la température de nacelle, afin de déterminer l'état du palier à roulement (12),
où une différence ou un rapport d'une température de palier, relativement à une température de nacelle, est déterminé(e) comme étant une température normalisée et est utilisé(e) pour l'évaluation, et où une valeur moyenne prévue pour la température normalisée est déterminée pour un intervalle de temps prédéfini.

2. Procédé selon la revendication 1, **caractérisé en ce que** la température de palier est évaluée statistiquement en même temps que la température de nacelle, et **en ce que**, en particulier, des valeurs moyennes sont déterminées pour les intervalles de temps prédéfinis.

3. Procédé selon l'une des revendications précédentes, **caractérisé en ce qu'**un profil des valeurs moyennes prévues pour la température normalisée est évalué sur une pluralité d'intervalles de temps, où on l'évalue en particulier la grandeur de la valeur moyenne et/ou une modification de la valeur moyenne.

4. Procédé selon l'une quelconque des revendications précédentes, **caractérise en ce qu'**une moyenne arithmétique de la valeur moyenne est déterminée à partir de valeurs moyennes de la température normalisée d'intervalles de temps passés, et **en ce que** l'on évalue un écart d'une valeur moyenne en cours, par rapport à la moyenne arithmétique.

5. Procédé selon l'une quelconque des revendications précédentes, **caractérisé en ce qu'**une moyenne arithmétique mobile est déterminée à partir d'un nombre défini d'intervalles de temps passés, et **en ce que** l'on évalue un écart d'une valeur moyenne en cours, par rapport à la moyenne arithmétique mobile.

6. Procédé selon l'une quelconque des revendications précédentes, **caractérisé en ce qu'**un signal d'alerte est émis en fonction de l'écart de la valeur moyenne en cours, par rapport à la moyenne arithmétique, et/ou en fonction de la grandeur de la valeur moyenne, en particulier quand l'écart de la valeur moyenne en cours, par rapport à la moyenne arithmétique, est de plus de 40 % et/ou quand la grandeur de la valeur moyenne dépasse une valeur limite.

7. Procédé selon l'une quelconque des revendications précédentes, **caractérisé en ce que** la mesure de l'écart de la valeur moyenne en cours, par rapport à la moyenne arithmétique, et/ou la valeur limite, est déterminée en fonction d'une analyse de la graisse concernant la graisse lubrifiante du palier à roulement (12).

8. Procédé selon l'une quelconque des revendications précédentes, **caractérisé en ce qu'**un signal d'alerte est émis en fonction du nombre et/ou de la grandeur des écarts, vers le haut, de valeurs moyennes en cours, par rapport à la moyenne arithmétique, dans des intervalles de temps qui se suivent.

9. Procédé selon l'une quelconque des revendications précédentes, **caractérisé en ce que** la température normalisée est déterminée seulement quand une puissance débitée électrique de la turbine éolienne (2) est supérieure à zéro ou à une autre valeur de seuil fixée.

10. Procédé selon l'une quelconque des revendications précédentes, **caractérisé en ce que** la température normalisée est évaluée en fonction d'une vitesse de vent mesurée, en particulier **en ce que** des groupes de zones de vitesses de vent sont formés, et les températures normalisées mesurées sont associées à chaque fois, pour l'évaluation statistique, à l'un des groupes en fonction de la vitesse de vent mesurée.

11. Procédé selon l'une quelconque des revendications précédentes, **caractérisé en ce qu'**une comparaison de valeurs moyennes des températures normalisées est faite à chaque fois à l'intérieur de l'un des groupes des zones de vitesses de vent.

12. Procédé selon l'une quelconque des revendications précédentes, **caractérisé en ce qu'**une valeur moyenne pour un intervalle de temps est prise en compte lors de l'évaluation, seulement quand un nombre de valeurs définies pour la température normalisée dépasse une valeur limite.

13. Procédé selon l'une quelconque des revendications précédentes, **caractérisé en ce qu'**une valeur moyenne est déterminée pour un intervalle de temps, seulement pour des intervalles de temps qui ont un laps de temps minimum par rapport à une première mise en service du palier à roulement (12).

14. Procédé selon l'une quelconque des revendications précédentes, **caractérisé en ce que** l'évaluation de la température normalisée est effectuée par rapport à des turbines éoliennes (2) d'un même parc éolien et/ou **en ce que** l'évaluation de la température normalisée est effectuée en fonction d'une position relative de deux turbines éoliennes (2) l'une par rapport à l'autre.

15. Procédé selon l'une quelconque des revendications précédentes, **caractérisé en ce que** la température normalisée est déterminée à partir de la différence qui existe entre la température de palier mesurée et la température de nacelle mesurée.
